# EUROPEAN PATENT APPLICATION

(11) **EP 4 220 126 A1**
(43) Date of publication of application: **02.08.2023**
(21) Application number: 23152918.1
(22) Date of filing: 23.01.2023
(51) Int. Cl.: G01N 19/04

(54) **SEALING QUALITY TESTING APPARATUS FOR DETERMINING THE QUALITY OF A SEALING BAND, PACKAGING PLANT HAVING A SEALING QUALITY TESTING APPARATUS, METHOD FOR DETERMINING THE QUALITY OF A SEALING BAND AND METHOD FOR PRODUCING COMPOSITE PACKAGES**

(30) Priority: 28.01.2022 EP 22153836
(71) Applicant: Tetra Laval Holdings & Finance S.A., 1009 Pully (CH)
(72) Inventor: PICCININI, Giorgio, 41123 Modena (IT); GORDILLO LÓPEZ, Jose Manuel, 28500 Arganda Del Re (ES); RIMONDI, Fabrizio, 41123 Modena (IT); SCARABELLI, Paolo, 41123 Modena (IT); SAVOIA, Alice, 41123 Modena (IT); FAGGI, Elia, 41123 Modena (IT); BELLONI, Giulia, 41123 Modena (IT); MELANDRI, Antonio, 41123 Modena (IT); RONCAGLIA, Riccardo, 41123 Modena (IT)
(74) Representative: Tetra Pak - Patent Attorneys SE

(57) **Abstract**

There is described a sealing quality testing apparatus (1) for determining the quality of a sealing band (2), the sealing band (2) being formed from a first band portion (3), a second band portion (4) and a layer of heat seal material (5) interposed between the first band portion (3) and the second band portion (4). The sealing quality testing apparatus (1) comprises a first clamping device (12) and a second clamping device (13) configured to clamp a sample (14) having the sealing band (2) between one another such that the sealing band (2) is interposed between the first clamping device (12) and the second clamping device (13), an actuation device (15) configured to actuate a relative movement of the first clamping device (12) and the second clamping device (13) so as actuate a delamination of the sealing band (2) and a vision system (16) configured to capture images of the sealing band (2) during the delamination.

## Description

### TECHNICAL FIELD

The present invention relates to a sealing quality testing apparatus for determining the quality of a sealing band, in particular, of a sealed composite package filled with a pourable product, in particular a pourable food product.

Advantageously, the present invention also relates to a packaging plant for packaging pourable products, in particular pourable food products, into sealed composite packages having one or more sealed bands and the packaging plant having a sealing quality testing apparatus.

Furthermore, the present invention also relates to a method for determining the quality of a sealing band of a sealed composite package filled with a pourable product, in particular a pourable food product.

Additionally, the present invention also relates to a method for forming sealed composite packages of a pourable product, in particular a pourable food product.

### BACKGROUND ART

As is known, many liquid or pourable food products, such as fruit juice, UHT (ultra-high-temperature treated) milk, wine, tomato sauce, etc., are sold in sealed composite packages made of a sterilized multilayer packaging material.

A typical example is the parallelepiped-shaped package for pourable food products known as Tetra Brik Aseptic (registered trademark), which is made by sealing and folding a laminated strip packaging material. The packaging material has a multilayer structure comprising a carton and/or paper base layer, covered on both sides with layers of heat-seal plastic material, e.g. polyethylene. In the case of aseptic packages for long-storage products, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging machines, some of which advance, in use, a web of packaging material through a sterilization unit of the packaging machine for sterilizing the web of packaging material. Then, the sterilized web of packaging material is maintained and advanced within an isolation chamber, and is folded and sealed longitudinally to form a tube, which is further advanced. Furthermore, the tube is filled with a pourable product, and is transversally sealed and cut along equally spaced transversal cross sections within a package forming apparatus of the packaging machine during advancement of the tube.

In more detail, the package forming apparatus comprises a plurality of forming and sealing assemblies, each one, in use, shaping and transversally sealing and cutting the tube so as to obtain the single packages.

Each forming and sealing assembly comprises a respective sealing unit for transversally sealing the tube for obtaining a respective transversal seal portion by locally compressing the tube and heating the respective portions of the layers of heat-seal plastic material. The heating may occur, for example, by sealing units generating ultrasonic vibrations.

Each forming and sealing assembly also comprises a cutting device for cutting through the transversal seal portion, thereby separating a sealed composite package from the tube, and forming a first transversal sealing band and a second transversal sealing band. While the respective first sealing band belongs to the just formed sealed composite package, the second sealing band belongs to the sealed composite package that will be formed directly afterwards.

The quality of the transversal sealing bands is of importance and, therefore, the quality should be monitored during the packaging process.

In order to execute test measurements, sample composite packages are taken from the plurality of formed composite packages at defined time intervals. A sample having a respective transversal sealing band is prepared from each of the sampled composite packages. After preparation of each sample, the technical operator uses a stretch plier designed to tear apart the respective sealing band. Thereby, the technical operator observes the sealing results.

However, the test results depend on the experience of the technical operator.

Even though the known means for controlling the quality of the transversal sealing bands provide for good results, a desire is felt in the sector to further improve the means for controlling the quality of the transversal sealing bands.

### DISCLOSURE OF INVENTION

It is therefore an object of the present invention to provide in a straightforward and low-cost manner a sealing quality test apparatus, which allows to reliably and repeatedly determine the quality of sealing bands.

It is a further object of the present invention to provide in a straightforward and low-cost manner a packaging plant having an improved sealing quality test apparatus.

It is an object of the present invention to provide in a straightforward and low-cost manner an improved method for determining the quality of sealing bands.

It is an object of the present invention to provide in a straightforward and low-cost manner an improved method for forming sealed composite packages of a pourable product, in particular a pourable food product.

According to the present invention, there is provided a sealing quality testing apparatus according to independent claim 1.

Preferred embodiments of the sealing quality testing apparatus are claimed in the claims being directly or indirectly dependent on claim 1.

According to the present invention, there is also provided a packaging plant according to claim 10 or 11.

Additionally, according to the present invention, there is also provided a method for determining the quality of sealing bands according to claim 12.

Preferred embodiments of the method are claimed in the claims being directly or indirectly dependent on claim 12.

Moreover, according to the present invention there is provided a method for forming sealed composite packages according to claim 14 or 15.

### BRIEF DESCRIPTION OF THE DRAWINGS

A non-limiting embodiment of the present invention will be described by way of example with reference to the accompanying drawings, in which:
Figure 1 is a perspective top-side view of a sealing quality testing apparatus according to the present invention, with parts removed for clarity;
Figure 2 is another perspective top-side view of portions of the sealing quality testing apparatus of Figure 1, with parts removed for clarity;
Figure 3 is a perspective view of details of the sealing quality testing apparatus of Figure 1, with parts removed for clarity;
Figure 4 is a perspective bottom view of details of the sealing quality testing apparatus of Figure 1, with parts removed for clarity;
Figure 5 is a perspective view of some more details of the sealing quality testing apparatus of Figure 1, with parts removed for clarity;
Figure 6 is a top view of other details of the sealing quality testing apparatus of Figure 1, with parts removed for clarity;
Figure 7 is a top view of some other portions of the sealing quality testing apparatus of Figure 1, with parts removed for clarity;
Figures 8a, 8b and 8c are schematic views of a sample having a sealing band at different times during a test procedure;
Figure 9 is a schematic section view of a sealing band to be tested by means of the sealing quality testing apparatus of Figure 1;
Figure 10 is a force curve measured during the execution of a test procedure and printed in dependence of the position;
Figure 11 is a force curve measured during the execution of a test procedure and printed in dependence of time; and
Figure 12 is a flow diagram indicating the formation of sealed composite packages;
Figure 13 is a schematic drawing of the sealing quality testing apparatus according to an embodiment of the present invention.

### BEST MODES FOR CARRYING OUT THE INVENTION

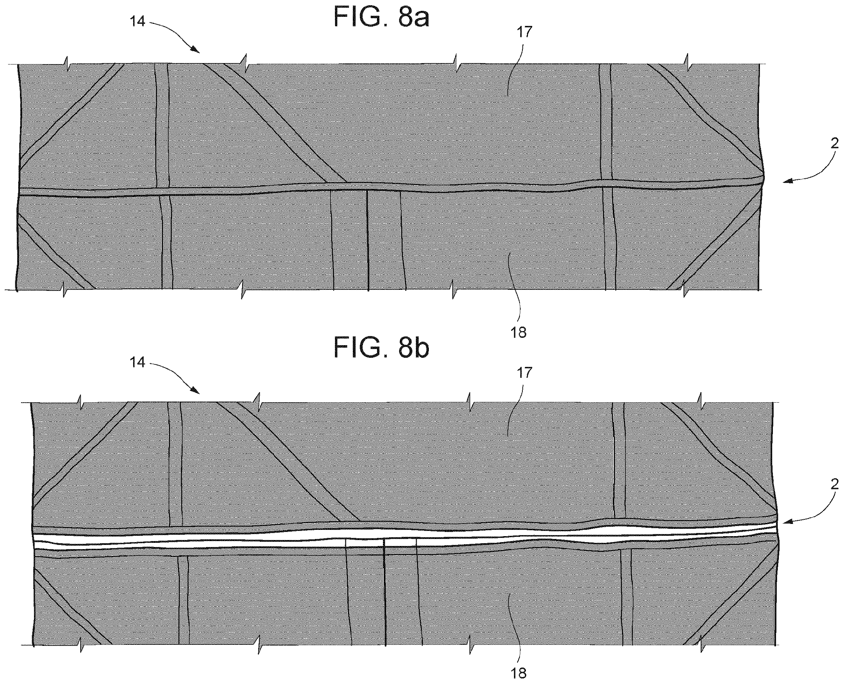

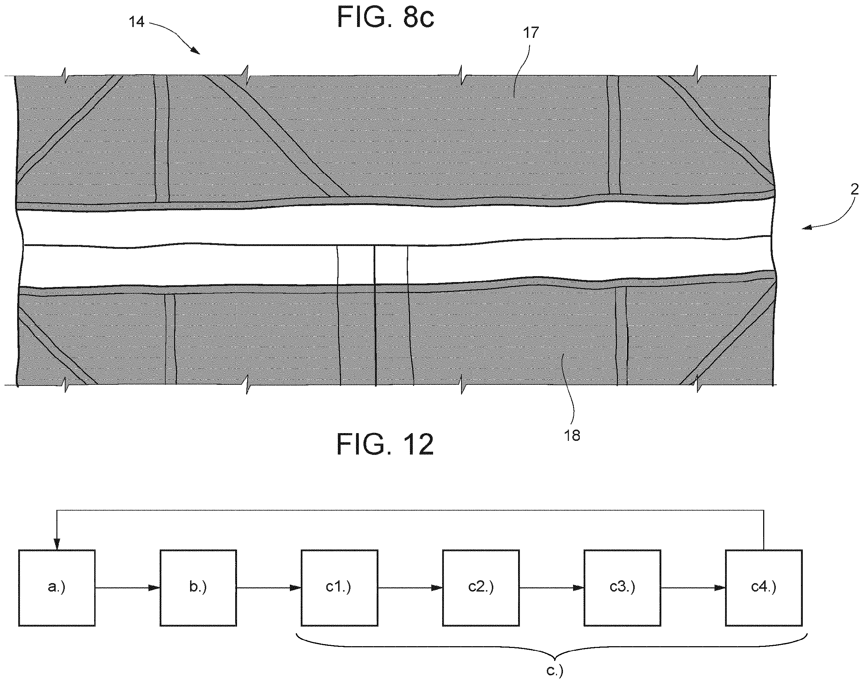

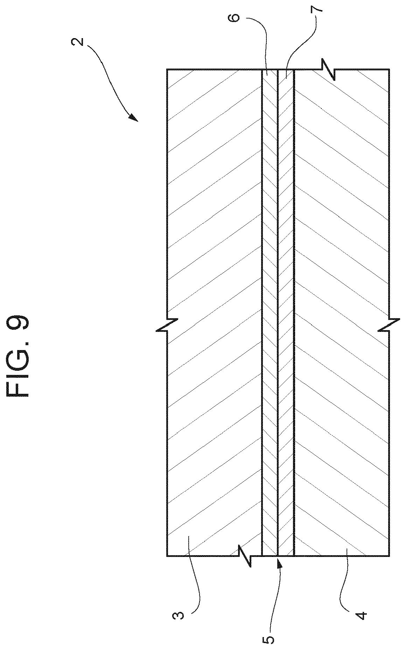

Number 1 indicates as a whole a sealing quality testing apparatus for determining the quality of a sealing band 2 (see Figures 8a, 8b, 8c and 9), in particular a sealing band 2 of a sealed composite package filled with a pourable product, in particular a pourable food product, such as (pasteurized) milk, fruit juice, wine, tomato sauce, salt, sugar or the like.

In particular, the sealed composite package may be formed from a multilayer packaging material.

In further detail, the multilayer packaging material may comprise at least one layer of fibrous material, such as e.g. a paper or cardboard, and at least two layers of heat-seal plastic material, e.g. polyethylene, interposing the layer of fibrous material in between one another. One of these two layers of heat-seal plastic material defines the inner face of the composite package contacting the pourable product.

Moreover, the packaging material may also comprise a layer of gas- and light-barrier material, e.g. aluminum foil or ethylene vinyl alcohol (EVOH) film, in particular being arranged between one of the layers of the heat-seal plastic material and the layer of fibrous material. Preferentially, the packaging material may also comprise a further layer of heat-seal plastic material being interposed between the layer of gas- and light-barrier material and the layer of fibrous material.

In further detail, the sealed composite package may comprise at least one longitudinal sealing band and one, in particular two, transversal sealing bands 2.

Preferentially, apparatus 1 may be configured to determine the quality of transversal sealing bands 2.

According to some possible non-limiting embodiments, the sealed composite package may be obtained from a single blank, which is formed into a sleeve having the longitudinal sealing band. Subsequently, the sleeve is formed into the sealed composite package, requiring the formation of at least one, in particular two, transversal sealing band(s) 2.

According to an alternative non-limiting embodiment, the multilayer packaging material may be provided in the form of a web. In particular, the web may comprise a plurality of repeated patterns, each pattern defining a respective blank for the formation of one respective sealed composite package.

According to such an embodiment, the web is formed into a tube, longitudinally sealed, filled with the pourable product, and transversally sealed and cut along equally spaced cross-sections thereby forming respective sealing bands 2.

According to some possible non-limiting embodiments, the sealed composite package comprises a longitudinal sealing band and a pair of respective transversal sealing bands 2, in particular arranged at opposite sides of the sealed composite package. In particular, one transversal sealing band 2 may define a transversal top sealing band and the other transversal sealing band 2 may define a transversal bottom sealing band.

According to some preferred non-limiting embodiments, each sealing band 2 may be formed from a first band portion 3, a second band portion 4 and a layer of heat seal material 5 interposed between first band portion 3 and second band portion 4.

In further detail, each sealing band 2 may result from an overlap of two portions of the multilayer packaging material and the respective sealing of the two overlapping portions.

Even more particular, each first band portion 3 and each second band portion 4 may comprise a respective layer of fibrous material, in particular the respective layer of fibrous material corresponding to a section of the layer of fibrous material of the multilayer packaging material.

Additionally (see Figure 9), the layer of heat-seal material 5 may result from the sealing of the two overlapping portions to one another and the fusion of the respective layers of heat-seal plastic material. In particular, the layer of heat-seal material 5 may be formed from at least a first portion of heat-seal material 6 and a second portion of heat-seal material 7.

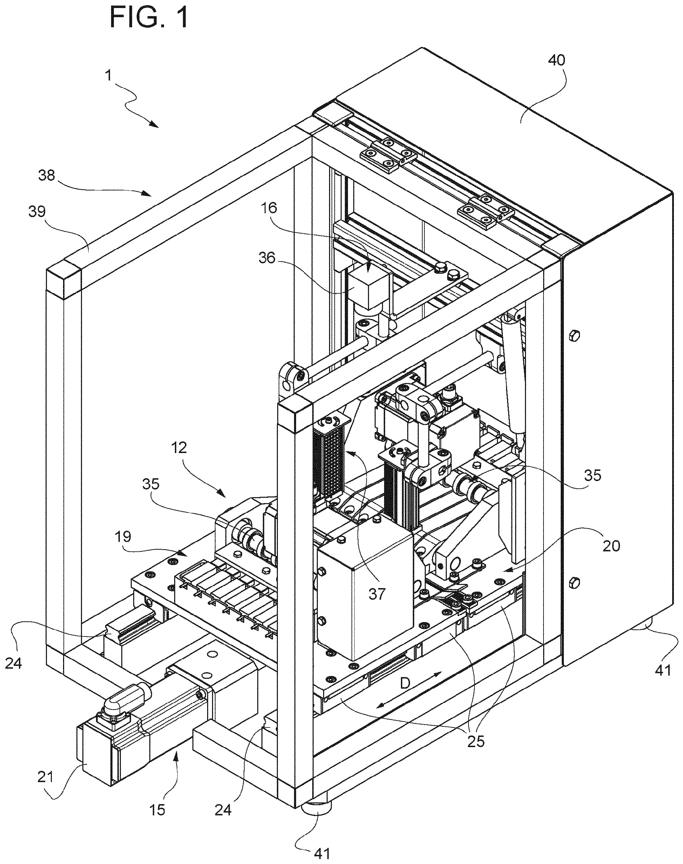

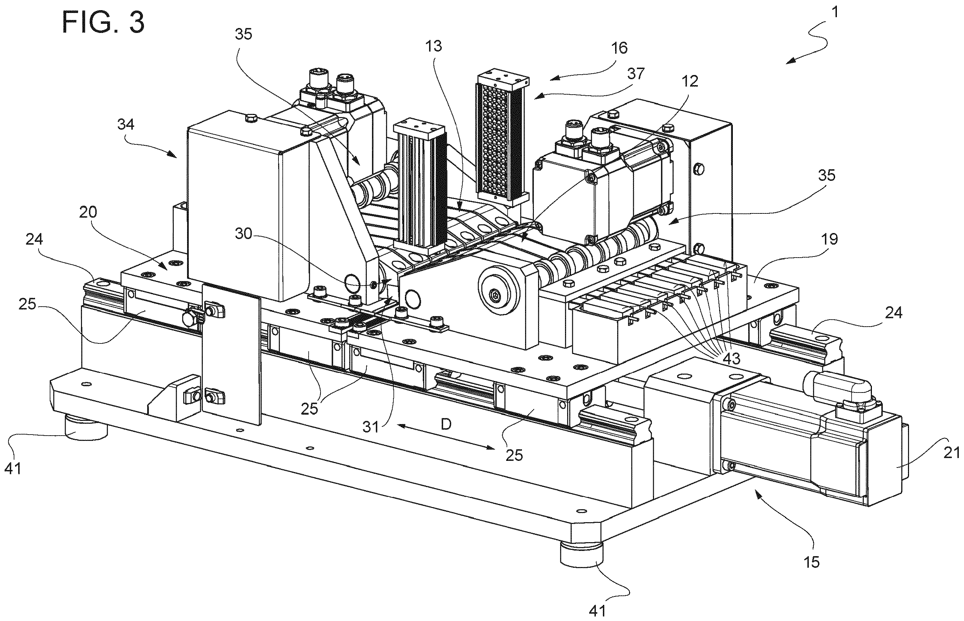

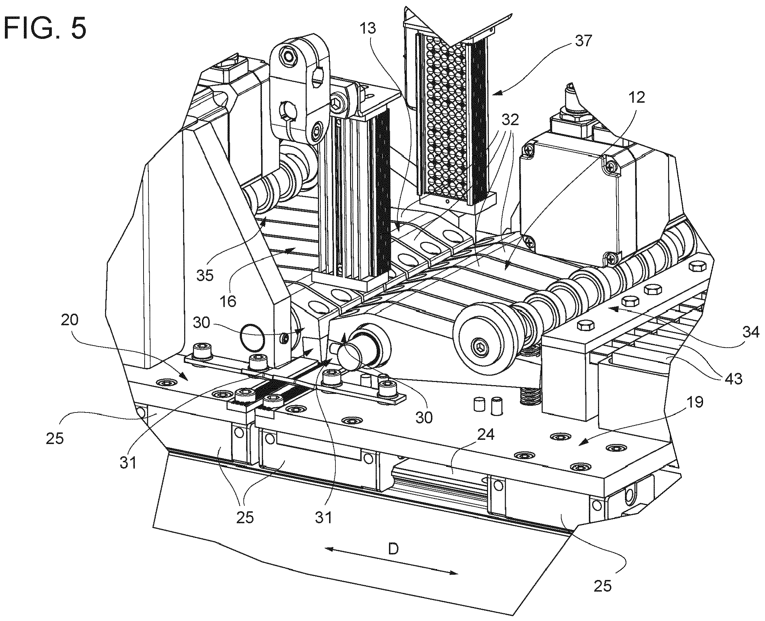

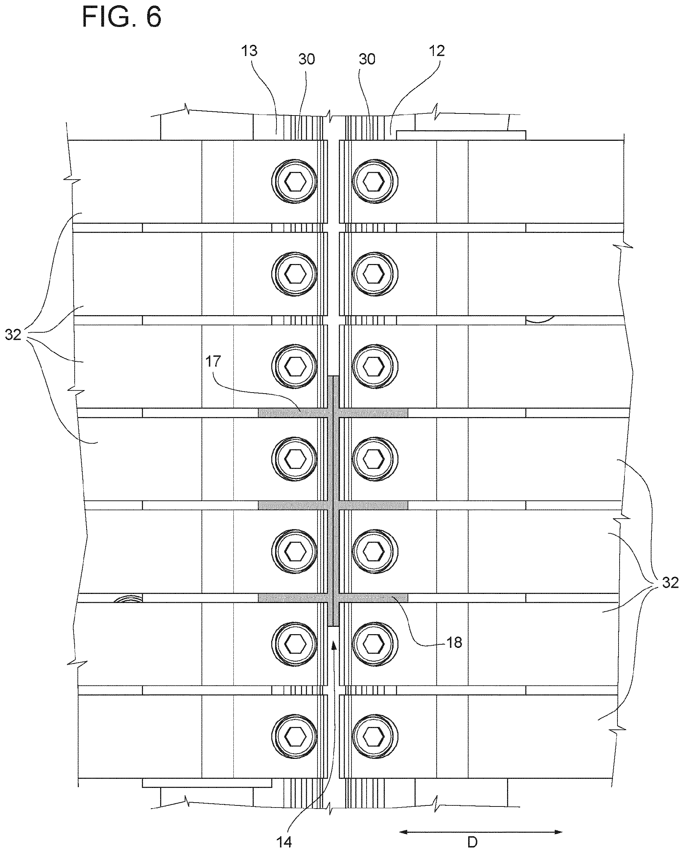

With particular reference to Figures 1 to 7, apparatus 1 comprises:
- a first clamping device 12 and a second clamping device 13 configured to clamp a sample 14 having sealing band 2 between one another such that sealing band 2 is interposed between first clamping device 12 and second clamping device 13;
- an actuation device 15 configured to actuate a relative movement between first clamping device 12 and second clamping device 13 so as cause a delamination of sealing band 2 of sample 14; and
- a vision system 16 configured to capture images of sealing band 2 of sample 14 during the delamination.

Preferably, the sealing quality testing apparatus comprises a working position for receiving the sample 14. In particular, the sample 14 is received at the working position interposed between the first clamping device 12 and the second clamping device 13, so that the delamination of the sealing band 2 occurs when the sample 14 is at the working position.

In particular, each sample 14 is prepared from a respective composite package.

More specifically, each sample 14 may be prepared such to have a (substantially) flat configuration.

Preferentially, each sample 14 may present a substantially rectangular or quadratic shape. In particular, substantially rectangular and quadratic indicates that the shape of sample 14 could be at least approximated by a rectangle or a square.

Each sample 14 may comprise the respective sealing band 2 and a first portion 17 and a second portion 18, the respective sealing band 2 being interposed between first portion 17 and second portion 18. Moreover, first band portion 3 and second band portion 4 may be integrally connected to respectively first portion 17 and second portion 18.

Moreover, each sample 14 may comprise a first edge and a second edge. The respective sealing band 2 being interposed between the first edge and the second edge.

It should be understood that samples 14 may also comprise further objects, such as closures, which are part of the packages.

In particular, actuation device 15 is configured to cause the delamination so as to tear first band portion 2 and second band portion 3 apart from one another. In particular, this allows to obtain insights into layer of heat-seal material 5, in particular first portion 6 and second portion 7.

In other words, in the present Application the term delamination is to be intended as the, in particular controlled, separation of portions of sealing band 2 from one another. In the specific case, the delamination occurs between first band portion 3 and second band portion 4.

In particular, actuation device 15 allows to repeat measurements on various samples 14 under controlled and defined conditions.

Even more particular, actuation device 15 may be configured to apply a defined force profile (force per time) and/or movement profile (velocity per time) onto various sealing bands 2. Such defined force profiles and/or movement profiles can be repeatedly applied.

According to some preferred non-limiting embodiments, apparatus 1 may advantageously comprise an analysis unit operatively connected to vision system 16 and configured to analyze one or more images acquired by means of vision system 16 and to determine the quality of sealing band 2 as a function of the one or more images.

In particular, the analysis unit may be configured to receive and to at least temporarily store the images.

Preferentially, vision system 16 may be configured to capture a series of images representative of the time-evolution of the delamination of sealing band 2, in particular of a temporal change of the shape of layer of heat-seal material 5. Figures 8a, 8b and 8c schematically show example shapes of sample 14, in particular sealing band 2, at different times of the delamination of the respective sealing band 2.

In particular, the analysis unit may be configured to analyze one or more images of the temporal series of images taken during the delamination of one respective sealing band 2 so as to determine the quality of sealing band 2.

According to some preferred non-limiting embodiments, the analysis unit may be configured to analyze the one or more images so as to detect the presence of defects, such as channels, burn marks, plastic lumps, and other.

Alternatively or in addition, the analysis unit may be configured to detect movements or tearing or force profiles of first band portion 3, a second band portion 4 and/or a layer of heat seal material.

Preferentially, the analysis unit may be configured to operate in the vision domain (analyze one or more images independently from the others), the time domain (analyze the temporal changes of the images) or in the multidomain (analyze the images in the time domain and the vision domain; combine the information coming from the time domain and the vision domain).

According to some preferred non-limiting embodiments, the analysis unit may be configured to analyze the images by means of artificial intelligence algorithms, e.g. by means of neural networks.

With particular reference to Figures 1 to 7, actuation device 15 may be configured to modify the relative position of first clamping device 12 and second clamping device 13 in a direction D transversal, in particular (substantially) perpendicular, to sealing band 2. In other words, actuation device 15 is configured to exert a force on sealing band 2 transversal, in particular (substantially) perpendicular, to sealing band 2.

Advantageously, actuation device 15 may comprise
- a first carriage 19 carrying first clamping device 12;
- a second carriage 20 carrying second clamping device 13; and
- an actuator 21, in particular an electric motor, operatively coupled to first carriage 19 and/or second carriage 20 and configured to control the relative position of first carriage 19 and second carriage 20 for controlling the relative position of first clamping device 12 and second clamping device 13.

According to the specific embodiment shown, actuator 21 may be configured to move both first carriage 19 and second carriage 20. In particular, actuator 21 may be configured to move first carriage 19 and second carriage 20 according to the same velocity profile and in opposite directions.

Alternatively, actuator 21 could be configured to move only one of first carriage 19 and second carriage 20.

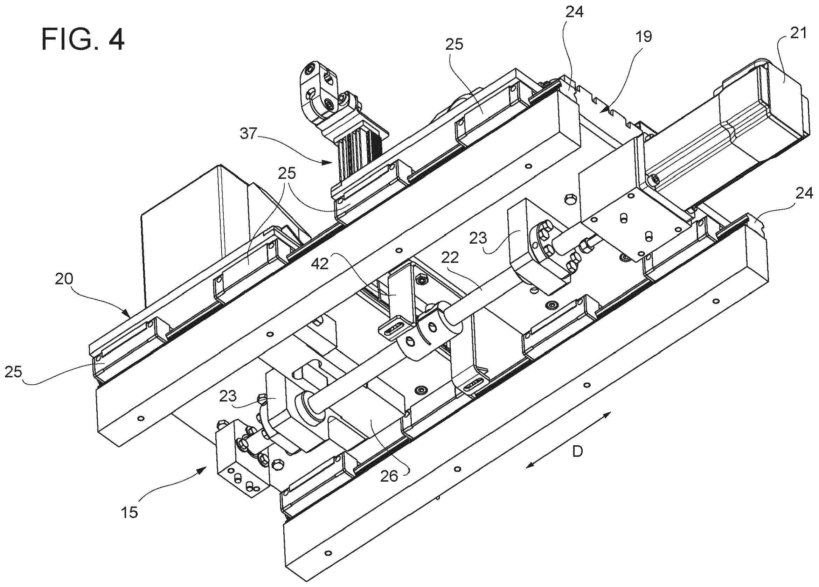

With particular reference to Figure 4, actuation device 15 may also comprise a control axle 22 operatively connected to actuator 21, first carriage 19 and second carriage 20 and, thereby, operatively coupling actuator 21 to first carriage 19 and second carriage 20.

In particular, actuator 21 may be configured to rotate control axle 22 around a rotation axis so as to move first carriage 19 and second carriage 20.

Preferentially, first carriage 19 and second carriage 20 each comprise a coupling element 23 operatively connected to control axle 22.

More specifically, control axle 22 may be operatively connected to coupling elements 23 by means of a respective threading and/or a respective ball screw.

Even more specifically, control axle 22 may comprise a first threading coupled to coupling element 23 of first carriage 19 and a second threading coupled to coupling element 23 of second carriage 20 having an opposed sense with respect to the first threading such that movement of first carriage 19 and second carriage 20 may occur in opposite directions.

In further detail and with regard to Figures 1 to 5, actuation device 15 may also comprise one or more tracks 24, in particular having a rectilinear shape, configured to guide movement of first carriage 19 and second carriage 20.

In particular, first carriage 19 and second carriage 20 comprise respective sliding elements 25 moveably coupling respectively first carriage 19 and second carriage 20 onto one or more corresponding tracks 24.

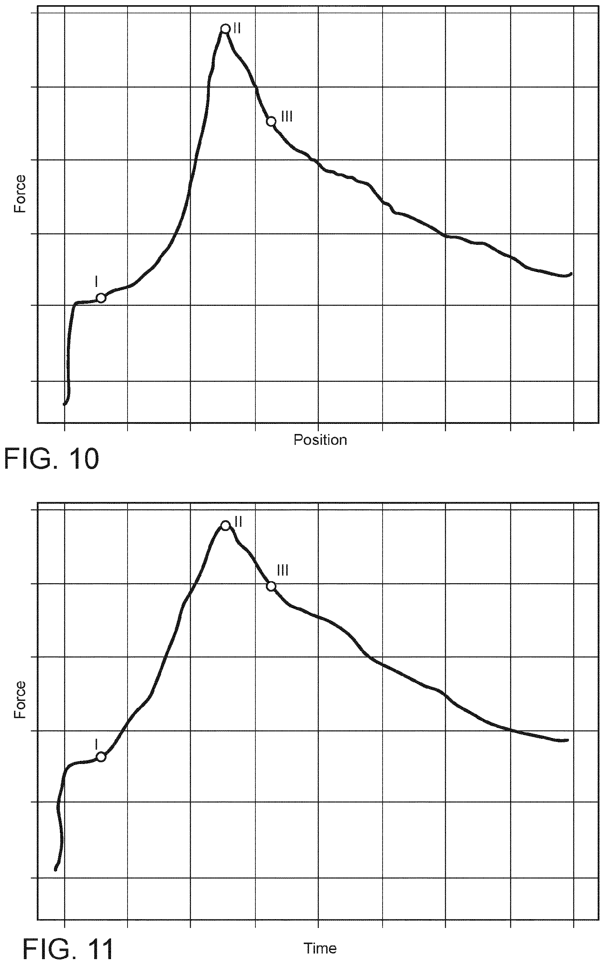

According to some preferred non-limiting embodiments, apparatus 1 may also comprise a force detection device 26 configured to determine a time-dependent force curve (see Figure 11) and/or a position-dependent force curve (see Figure 10), in particular the position being indicative of the relative distance between first clamping device 12 and second clamping device 13, of the forces acting on sealing band 2 during its delamination and/or the forces exerted by actuation device 15 on sample 14 while actuation device 15 moves, in use, first clamping device 12 and second clamping device 13 apart from one another.

According to some possible embodiments, force detection device 26 may comprise one or more force cells and/or an encoder connected to actuator 21.

Force detection device 26 can determine a force curve as the one shown in Figure 10 and/or in Figure 11. Points I, II and III of the respective force curves indicate moments at which vision system 16 takes images of sample 14, which at the specific time and/or position of the imaging has respective example shapes as shown in Figures 8a, 8b and 8c.

According to some preferred non-limiting embodiments, first clamping device 19 and second clamping device 20, each comprises a respective first clamping surface and a respective second clamping surface, in particular facing the respective first clamping surface, so as to clamp a portion of sample 14 between the respective first clamping surface and the respective second clamping surface.

According to the specific example shown in Figures 1 to 5, each first clamping surface may be discrete, i.e. the first clamping surface may be formed by a plurality of portions being detached from one another. Alternatively, each first clamping surface may be continuous.

Additionally, each second clamping surface may be discrete (as shown in the specific example) or may be continuous.

In particular, each first clamping surface and each second clamping surface may extend along a respective longitudinal axis. Preferentially, once sample 14 is clamped by first clamping device 12 and second clamping device 13 sealing band 2 is substantially parallel to the longitudinal axes of the first clamping surface and the second clamping surface.

More specifically, first clamping device 12 and second clamping device 13, each may comprise a respective first clamp portion 30 having the respective first clamping surface and a second clamp portion 31 having the respective second clamping surface.

Even more specifically, each first clamp portion 30 may comprise a plurality of clamp fingers 32, each one carrying a portion of the respective first clamping surface. In particular, each clamp finger 32 may be equally spaced apart from the other clamp fingers 32 along a direction parallel to the respective longitudinal axis of the respective first clamping surface.

Moreover, each second clamp portion 31 may comprise a plurality of base elements, each one aligned with respect to one respective clamp finger 32 and each one carrying a portion of the respective second clamping surface. In particular, the portion of the respective second clamping surface faces a respective portion of the first clamping surface carried by the respective clamp finger 32.

Preferentially, each clamp finger 32 may be controllable, in particular selectively controllable, in a clamping position, in which clamp finger 32 is configured to clamp a portion of sample 14 in cooperation with the respective base element, and a release position, in which clamp finger 32 is distanced from the respective base element so as to allow for placing a portion of sample 14 between clamp finger 32 and the respective base element.

According to some preferred non-limiting embodiments, each first clamping device 12 and second clamping device 13 is controllable in a respective receiving configuration and a respective clamping configuration for being able to respectively receive and clamp the respective portion of sample 14.

Preferentially, apparatus 1 may comprise a control device 34 configured to selectively control first clamping device 12 and second clamping device 13 in the receiving configuration and the clamping configuration.

In particular, in order to control first clamping device 12 and second clamping device 13 in the respective receiving configuration and the respective clamping configuration, control device 34 may be configured to control some or all of the respective clamping fingers 32 in the corresponding release positions and clamping positions, respectively.

Moreover, control device 34 may be configured to control some clamping fingers 32 of first clamping device 12 and/or second clamping device 13 selectively in the release position and the clamping position so as to determine specific delamination profiles during operation of apparatus 1.

In particular, control device 34 may be configured to approach and withdraw the respective first clamping surface and the respective second clamping surface as a whole or partially (in particular, by selectively controlling clamp fingers 32) towards and away from one another for controlling the first clamping device 12 or the second clamping device 13 in the respective clamping configuration and receiving configuration, respectively.

Preferentially, each clamp finger 32 may be angularly moveable, in particular selectively angularly moveable, about a respective rotation axis between the clamp position and the release position.

Preferentially, each clamp finger 32 may be biased, in particular selectively biased, in one of the clamp position or the release position, in the specific embodiment shown in the clamp position.

According to some preferred non-limiting embodiments, control device 34 may comprise two control groups 35, one associated to the first clamping device 12 and the other one associated to the second clamping device 13 so as to selectively control the respective first clamping device 12 and the respective second clamping device 13 between the respective clamping configuration and the respective receiving configuration.

Preferentially, each control group 35 may operate by means of an eccentric.

According to some preferred non-limiting embodiments, control device 34 may comprise one or more control elements 43 configured to selectively engage or disengage one or more respective clamp fingers 32 from the respective control group 35, in particular the respective eccentric, preferentially such that the one or more respective clamp fingers 32 are arranged in the release position.

With particular reference to Figures 1 to 5, vision system 16 may comprise an imaging device 36, such as a video camera, for capturing the images of sealing band 2 during its delamination and, in particular also an illumination device 37 for illuminating sample 14 and/or at least sealing band 2.

Preferentially, imaging device 36 is arranged such that imaging device 36 is vertically spaced apart from sample 14, in particular above sample 14, e.g. with sample 14 being clamped by first clamping device 12 and second clamping device 13.

According to some possible non-limiting embodiments, vision system 16 may also comprise optical filters, in particular polarization filters. The optical filters may be associated to illumination device 37 and/or imaging device 36.

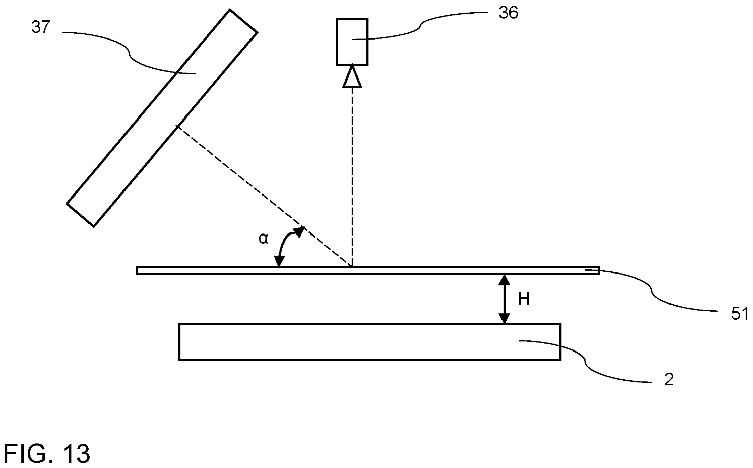

In particular, with reference to figure 13, the apparatus may further comprise a polarization filter 51. The polarization filter 51 is interposed between the imaging device 36 of the vision system 16 and the working position; in other words, the polarization filter 51 is interposed between the imaging device 36 and the sealing band 2 received at the working position. The polarization filter 51 is preferably distanced from the imaging device 36 and/or from the sample 14. As previously mentioned, an illumination device 37 is provided, to illuminate the sealing band 2 (and/or the sample 14) located at the working position. In figure 13 only one illumination device 37 is illustrated, however, preferably, a pair of illumination devices 37 are provided, on opposite sides of the imaging device 36. Such a configuration allows a better quality of the images acquired by the imaging device.

Preferably, the polarization filter 51 is of circular type. In other non-limiting embodiments, the polarization filter 51 is of linear and/or elliptical type.

In particular, a distance H between the sealing band 2 (and/or the sample 14) and the polarization filter 51 is between 10 mm and 50 mm, more in particular between 20 mm and 40 mm, e.g. 30 or 31 mm.

In particular, the illumination device 37 may be a led bar illuminator. According to a preferred embodiment, an angle α defined between the rays emitted by the illumination device 37 and the sealing band 2 (and/or the sample 14) is less than 90 degrees, preferably less than 60 degrees or 45 degrees.

In one embodiment, the imaging device 36 might be of the type described in patent documents US2020/0013819A1 and/or WO201702715 A1. It is expressly understood that all the features of the imaging device of patent documents US2020/0013819A1 and/or WO201702715A1 can be applied to the imaging device of this embodiment. More specifically, in this embodiment, the imaging device 36 includes the polarization filter 51 (i.e. the polarization filter 51 is incorporated in the imaging device 36). The polarization filter 51 includes a plurality of units (or chips) and, for each unit, a first and a second linear polarizing filter portion having a first and a second polarizing direction, respectively. In other words, the receiving polarizing filter includes, for each unit, a respective plurality of linear polarizing filter portions, each having a respective polarizing direction, which is different from the others. More specifically, for each unit, the receiving polarizing filter includes four portions having respective polarizing directions angularly spaced at 45° from each other (for example: 0 °, 45 °, 90 °, 135 °). For each linear polarizing filter portion, the imaging device 36 (i.e. the camera) includes a photoelectric converter section. Thus, the imaging device 36 (i.e. the camera) includes a plurality of photoelectric converter sections. The photoelectric converter sections are symmetrical. Preferably, each unit defines (or corresponds to) one pixel. In an embodiment, each photoelectric converter section defines one pixel. Thus, for each snap, the imaging device 36 (i.e. the camera) captures a plurality of images (each filtered by a respective linear filter portion), for example four images. The control unit is configured to process the images to derive a single image which is then analyzed to identify defects of the sealed area.

For example, the control unit is configured to apply a glare reduction algorithm and/or a degree of linear polarization (DOLP) technique.

Advantageously, sample 14 is to be clamped by means of first clamping device 12 and second clamping device 13 such that imaging device 36 faces and images an inner face of sample 14 (i.e. sample 14 is oriented towards imaging device 36 such that the face of sample 14 corresponds to an inner face of the respective composite package being in contact with the pourable product).

With particular reference to Figures 1 to 3, apparatus 1 may also comprise a housing 38 (only partially shown with parts omitted for clarity) within which at least first clamping device 12, second clamping device 13, vision system 16 and at least portions of actuation device 15 are arranged.

In more detail, housing 38 may comprise an access port 39 moveably connected, in particular hinged, to a fixed part 40. In particular, access port 39 may be raised and lowered so as to respectively allow and impede to access first clamping device 12 and second clamping device 13. Therefore, it is possible to place and remove samples 14 and to operate apparatus 1 in full safety.

According to some preferred non-limiting embodiments, housing 38 may comprise a material limiting the passage of light. This allows to improve the imaging quality.

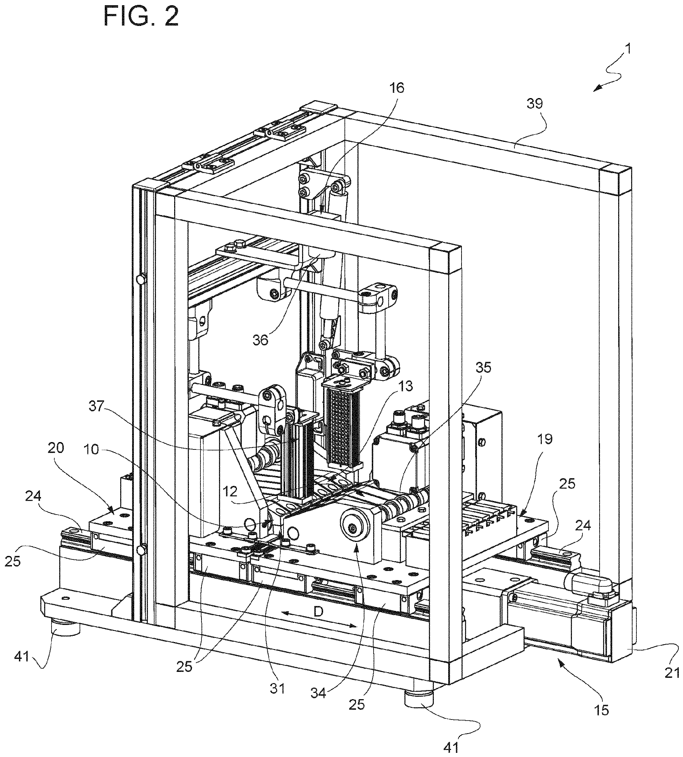

Moreover, access port 39 may comprise two lateral walls and a front wall, which are not shown in Figures 1 and 2.

According to some preferred non-limiting embodiments, housing 38 may also comprise support feet 41, which allow placing apparatus 1 onto a support surface. Preferentially, one or more support feet 41 may be height-adjustable.

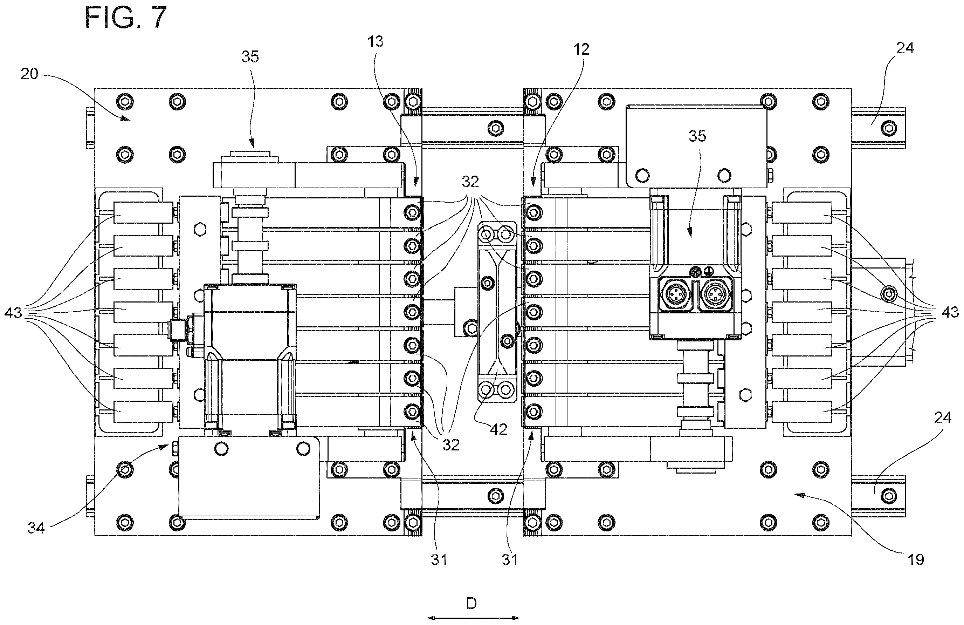

With particular reference to Figures 4 and 7, apparatus 1 may also comprise a placement guide 42 configured to facilitate alignment and centering of sample 14.

According to some preferred non-limiting embodiments, the packaging plant, in particular apparatus 1, may also comprise a human-machine interface for allowing interaction of a user with apparatus 1.

Preferentially, the human-machine interface may be configured to receive commands for controlling operation of apparatus 1.

Alternatively or additionally, the human-machine interface may comprise a screen and may be configured to show one or more of the acquired images and/or to show the obtained force curves.

According to some possible embodiments, the human-machine interface may be configured to display the results of the assessment performed by the analysis unit.

According to some preferred non-limiting embodiments, the apparatus comprises a reading (or scanning) apparatus configured to read (or scan) an identification code (or identification mark) which is present on the sample. The identification code may be a QR code, or a bar code, or a number, or any other type of code. The reading apparatus may be defined by said vision system (in this case, a camera of the vision system also reads the identification code) or may include a dedicated camera. In particular, the identification code is read before delamination of the sealing band. The analysis unit may be configured to associate said one or more images of the sealing band captured by the vision system to said identification code. This allows to correlate information associated to the sample (e.g. regarding the production process of the sample) with the images captured by the vision system, to improve traceability of the samples and quality check.

According to some preferred non-limiting embodiments, sealing quality testing apparatus 1 may be part of a packaging plant, the packaging plant being configured to form sealed composite packages filled with the pourable product. In particular, the sealing quality testing apparatus 1 may be configured to determine the quality of one or more sealing bands 2 of sample composite packages, removed from the overall production and in particular at predetermined time intervals and/or at specific events.

The packaging plant may comprise, in addition to sealing quality testing apparatus 1:
- a packaging apparatus for forming a plurality of sealed composite packages having one or more sealing bands 2, in particular two transversal sealing bands and/or one longitudinal sealing band, and being filled with the pourable product; and
- a sampling unit for sampling one or more sealed composite packages from the plurality of sealed composite packages.

In particular, the packaging apparatus produces a plurality of composite packages advancing along an advancement path and the sampling unit is arranged downstream of the packaging apparatus along the advancement path.

Sealing quality testing apparatus 1 may be used for determining the quality of one or more sealing bands 2 of the one or more sealed composite packages sampled by the sampling unit. In particular, one or more samples 14 are prepared from the one or more sampled composite packages.

In more detail, the packaging apparatus may be configured to produce the sealed composite packages from the multilayer packaging material, in particular being provided in the form of a web.

Furthermore, the packaging plant, in particular the packaging apparatus, may comprise a control unit configured to control operation of the packaging apparatus.

Moreover, the packaging apparatus may comprise a transversal sealing device for generating transversal sealing bands of the sealed composite packages. In particular, the control unit is operatively connected to the transversal sealing device and configured to control operation of the transversal sealing device, in particular in dependence of the quality determined by means of sealing quality testing apparatus 1 of the one or more sealing bands 2 of the one or more sampled sealed composite packages.

In further detail, the packaging apparatus may comprise:
- a conveying device for advancing (in a known manner) the web along a web advancement path to a forming station, at which, in use, the web is formed into a tube;
- an isolation chamber having an inner environment, in particular an inner sterile environment containing a sterile gas, and being separated from an (hostile) outer environment;
- a tube forming and sealing device configured to form the tube from the, in use, advancing web within the inner environment and to longitudinally seal the tube within the inner environment;
- a filling device for filling the tube with the pourable product; and
- a package forming apparatus configured to form, to transversally seal and to transversally cut the, in use, advancing tube for forming the composite packages.

In particular, the package forming apparatus may comprise the transversal sealing device.

Moreover, the packaging apparatus may also comprise a sterilizing unit configured to sterilize the, in use, advancing web at a sterilization station, in particular the sterilization station being arranged upstream of the forming station along the web advancement path.

Preferentially, the tube forming and sealing device may be arranged such that the tube may present a vertical orientation.

In even more detail, the tube forming and sealing device may be configured to gradually fold the web into the tube, in particular by overlapping the longitudinal edges of the web with one another. Thereby, in use, a longitudinal seam portion of the tube is formed. In particular, sections of the longitudinal seam portions define the longitudinal sealing bands of respective sealed composite packages.

More specifically, the tube forming and sealing device may comprise at least two forming ring assemblies, in particular arranged within the isolation chamber, being configured to gradually fold in cooperation with one another the web into the tube, in particular by overlapping the longitudinal edges of the web with one another.

Additionally, the tube forming and sealing device may comprise a sealing head, in particular arranged within the isolation chamber, and configured to longitudinally seal the tube, in particular along the longitudinal seam portion.

Moreover, the tube forming and sealing device may also comprise a pressuring assembly configured to exert a mechanical force on the longitudinal seam portion.

The package forming apparatus may comprise:
- a plurality of forming and sealing assemblies, each one configured to at least form (shape) the tube, to transversally seal the tube, and in particular to also transversally cut the tube; and
- a conveying unit configured to advance the forming and sealing assemblies.

More specifically, each forming and sealing assembly may comprise:
- a forming shell configured to at least partially define the shape of the composite packages; and
- a sealing unit configured to at least transversally compress, in particular flat-lay and squeeze, and to transversally seal the tube, in particular during advancement of the tube and between two respective composite packages.

In particular, the transversal sealing device may comprise the sealing units of the forming and sealing assemblies. Preferentially, the control unit may be configured to control operation (e.g. power, force etc.) of the sealing units in dependence of the determined quality of the transversal sealing bands 2.

Moreover, each forming and sealing assembly may comprise a cutting device for transversally cutting the tube.

Preferentially, each sealing apparatus may be configured to form a main sealing band, and in particular the respective cutting device may be configured to transversally cut through the main sealing band. Even more preferentially, each main sealing band forms - once cut - the respective transversal sealing band 2 of a leading composite package and the respective transversal sealing band 2 of a successive (trailing) composite package, in particular the latter still being part of the tube.

In further detail, each forming shell may comprise at least a first half-shell and a second half-shell configured to at least partially define in cooperation the shape of the respective composite package. In particular, the first half-shell and the second half-shell may be configured to contact the tube from opposite sides thereof.

Moreover, each sealing unit may comprise a respective first portion (e.g. a sonotrode), in particular associated to the first half-shell, and a respective second portion (e.g. an anvil), in particular associated to the second half-shell. Each first portion and the respective second portion may be configured to cooperate together, in particular to transversally compress and to transversally seal the tube.

In particular, the control unit may be configured to control operation of each first portion, e.g. of the sonotrode, in dependence of the determined quality of the sealing bands 2.

In use, the packaging plant produces sealed composite packages filled with the pourable product, in particular the pourable food product.

With reference to Figure 12, operation of the packaging plant comprises the steps of:
a.) forming the plurality of sealed composite packages having one or more sealing bands 2 and being filled with the pourable product;
b.) sampling one or more sealed composite packages from the plurality of sealed composite packages; and
c.) determining the quality of one or more sealing bands 2 of one or more sampled sealed composite packages, in particular by means of apparatus 1.

Preferentially, step b.) and step c.) are executed, in particular repeatedly executed, during step a.). Even more preferentially, the results from step c.) are used to control step a.).

In more detail, during step a.) the transversal sealing device may form the transversal sealing bands of the sealed composite packages. Preferentially, the transversal sealing device may be controlled in dependence of the determined quality of the one or more sealing bands 2 of the one or more sampled sealed composite packages and as determined during step c.).

Furthermore, during step a.) the following sub-steps may be executed:
- advancing the web of packaging material;
- folding the web of packaging material into the tube;
- longitudinally sealing the tube;
- filling the tube with the pourable product;
- shaping the tube;
- transversally sealing the tube; and
- transversally cutting the tube.

In more detail, during the step c.), the following sub-steps are executed:
c1.) clamping sample 14 having sealing band 2 by means of first clamping device 12 and second clamping device 13 and such that sealing band 2 is interposed between first clamping device 12 and second clamping device 13;
c2.) delaminating sealing band 2 by actuating, in particular by means of actuation device 15, a relative movement between first clamping device 12 and second clamping device 13; and
c3.) capturing, in particular by means of vision system 16, one or more images of sealing band 2 during executing of sub-step c2.).

Preferentially, during execution of step c.) also a sub-step c4.) of analyzing is executed, in particular by the analyzing unit, during which the one or more images are analyzed, in particular by means of the analyzing unit, so as to determine the quality of sealing band 2. Preferentially, during sub-step c4.), the one or more images are analyzed so as to detect the presence of defects.

According to some preferred non-limiting embodiments, during the sub-step c4.) new values of the parameters to be used during step a.), in particular during the transversal sealing, may be suggested and/or fed to the packaging apparatus and/or a technical operator.

According to some preferred non-limiting embodiments, during step c.) also a sub-step of preparing sample 14 is executed, during which sample 14 is cut from a sampled sealed composite package (as taken during step b.)).

In more detail, during sub-step c1.), at first, first clamping device 12 and second clamping device 13 are controlled, in particular by means of control device 34, in the respective receiving configuration, portions of sample 14 are placed, in particular with the help of placement guide 42, between the first clamping surfaces and the respective second clamping surface. Afterwards, first clamping device 12 and second clamping device 13 are controlled, in particular by means of control device 34, in the respective clamping configurations thereby clamping the portions of sample 14 between the first clamping surfaces and the respective second clamping surfaces.

Moreover, during sub-step c2.) actuation device 15 moves first carriage 19 and second carriage 20 away from one another, in particular according to a determined movement profile.

Preferentially, during sub-step c2.) force detection device 26 may monitor the force curve.

According to some preferred non-limiting embodiments, the method further comprises the steps of: reading (or scanning) an identification code present on the sample, and associating said one or more images of the sealing band to said identification code. The identification code may be a QR code or a bar code or any other type of code.

The advantages of sealing quality testing apparatus 1 and/or of the packaging plant and/or the methods according to the present invention will be clear from the foregoing description.

In particular, sealing quality testing apparatus 1 allows repetitive measurements on different samples 14 under defined conditions.

A further advantage resides in that the quality assessment of sealing bands 2 can be executed independently of the experience of the technical operator.

An even other advantage can be seen in that the images can be analyzed automatically.

Clearly, changes may be made to sealing quality testing apparatus 1 and/or of the packaging plant and/or the methods as described herein without, however, departing from the scope of protection as defined in the accompanying claims.

## Claims

1. - Sealing quality testing apparatus (1) for determining the quality of a sealing band (2), the sealing band (2) being formed from a first band portion (3), a second band portion (4) and a layer of heat seal material (5) interposed between the first band portion (3) and the second band portion (4);
the sealing quality testing apparatus (1) comprises:
- a working position for receiving a sample (14) having the sealing band (2);
- a first clamping device (12) and a second clamping device (13) configured to clamp the sample (14) having the sealing band (2) between one another such that the sealing band (2) in the working position is interposed between the first clamping device (12) and the second clamping device (13);
- an actuation device (15) configured to actuate a relative movement of the first clamping device (12) and the second clamping device (13) so as to cause a delamination of the sealing band (2); and
- a vision system (16) configured to capture images of the sealing band (2) during the delamination.

2. - Apparatus according to claim 1, wherein the sealing quality testing apparatus (1) further comprises an analysis unit operatively connected to the vision system (16) and configured to analyze one or more images acquired by means of the vision system (16) and to determine the quality of the sealing band (2) as a function of the one or more images.

3. - Apparatus according to claim 2, wherein the analysis unit is configured to analyze the one or more images so as to detect the presence of defects.

4. - Apparatus according to any one of the preceding claims, wherein the actuation device (15) is configured to modify the relative position of the first clamping device (12) and the second clamping device (13) in a direction transversal, in particular perpendicular, to the sealing band (2).

5. - Apparatus according to any one of the preceding claims, wherein the actuation device (15) comprises:
- a first carriage (19) carrying the first clamping device (12);
- a second carriage (20) carrying the second clamping device (13); and
- an actuator (21) operatively coupled to the first carriage (19) and the second carriage (20) and configured to control the relative position of the first carriage (19) and the second carriage (20) for controlling the relative position of the first clamping device (12) and the second clamping device (13).

6. - Apparatus according to any one of the preceding claims, and further comprising a force detection device (26) configured to determine a time-dependent curve and/or a position-dependent curve of forces acting on the sealing band (2) during its delamination.

7. - Apparatus according to any one of the preceding claims, wherein the first clamping device (12) and the second clamping device (13), each comprises a respective first clamping surface and a respective second clamping surface so as to clamp a portion of the sample (14) between the respective first clamping surface and the respective second clamping surface.

8. - Apparatus according to any one of the preceding claims, wherein the vision system (16) comprises an illumination device (37) for illuminating at least the sealing band (2) and an imaging device (36) for capturing the images of the sealing band (2) during its delamination.

9. - Apparatus according to any of the previous claims, wherein the vision system (16) comprises an imaging device (36) for capturing the images of the sealing band (2) during its delamination and the apparatus further comprises a polarization filter (51) interposed between the imaging device (36) and the working position, wherein preferably the polarization filter (51) is of circular type or elliptical type or linear type.

10. - Packaging plant for packaging a pourable product into sealed composite packages formed from a multilayer packaging material comprising:
- a packaging apparatus for forming a plurality of sealed composite packages having one or more sealing bands (2) and being filled with the pourable product;
- a sampling unit for sampling one or more sealed composite packages from the plurality of sealed composite packages; and
- a sealing quality testing apparatus (1) according to any one of the preceding claims for determining the quality of one or more sealing bands (2) of one or more sampled sealed composite packages.

11. - Packaging plant according to claim 10, wherein the packaging apparatus comprises:
- a transversal sealing device for generating transversal sealing bands of the sealed composite packages; and
- a control unit operatively connected to the transversal sealing device and configured to control operation of the transversal sealing device in dependence of the determined quality of the one or more sealing bands (2) of the one or more sampled sealed composite packages.

12. - Method for determining the quality of a sealing band (2) of a sealed composite package filled with a pourable product, in particular a pourable food product, the sealing band (2) being formed from a first band portion (3), a second band portion (4) and a layer of heat seal material (5) interposed between the first band portion (3) and the second band portion (4);
the method comprises the steps of:
- clamping a sample (14) having the sealing band (2) by means of a first clamping device (12) and a second clamping device (13) and such that the sealing band (2) is interposed between the first clamping device (12) and the second clamping device (13);
- delaminating the sealing band (2) by actuating a relative movement of the first clamping device (12) and the second clamping device (13); and
- capturing one or more images of the sealing band (2) during the step of delaminating.

13. - Method according to claim 12, and further comprising a step of analyzing, during which the one or more images are analyzed so as to determine the quality of the sealing band (2), wherein during the step of analyzing, the one or more images are analyzed so as to detect the presence of defects.

14. - Method according to claim 12 or 13, further comprising the steps of:
- reading an identification code on the sample (14), and
- associating said one or more images of the sealing band (2) to said identification code.

15. - Method for forming sealed composite packages filled with a pourable product from a multilayer packaging material comprising the steps of:
- forming a plurality of sealed composite packages having one or more sealing bands (2) and being filled with the pourable product;
- sampling one or more sealed composite packages from the plurality of sealed composite packages; and
- determining the quality of one or more sealing bands (2) of one or more sampled sealed composite packages according to a method according to any one of claims 11 to 14.

16. - Method according to claim 15, wherein during the step of forming a transversal sealing device for forming transversal sealing bands of the sealed composite packages is operated and the operation of the transversal sealing device is controlled in dependence of the determined quality of the one or more sealing bands (2) of the one or more sampled sealed composite packages.

## Amended claims

### Amended claims in accordance with Rule 137(2) EPC.

1. Sealing quality testing apparatus (1) for determining the quality of a sealing band (2), the sealing band (2) being formed from a first band portion (3), a second band portion (4) and a layer of heat seal material (5) interposed between the first band portion (3) and the second band portion (4);
the sealing quality testing apparatus (1) comprises:
- a working position for receiving a sample (14) having the sealing band (2);
- a first clamping device (12) and a second clamping device (13) configured to clamp the sample (14) having the sealing band (2) between one another such that the sealing band (2) in the working position is interposed between the first clamping device (12) and the second clamping device (13);
- an actuation device (15) configured to actuate a relative movement of the first clamping device (12) and the second clamping device (13) so as to cause a delamination of the sealing band (2); and
- a vision system (16) configured to capture images of the sealing band (2) during the delamination,
wherein the sealing quality testing apparatus (1) further comprises an analysis unit operatively connected to the vision system (16) and configured to analyze one or more images acquired by means of the vision system (16),
**characterized in that** the analysis unit is configured to determine the quality of the sealing band (2) as a function of the one or more images, wherein the vision system (16) is configured to capture a series of images representative of the time-evolution of the delamination of the sealing band (2),
and the analysis unit is configured to analyze the images so as to detect the presence of defects.

2. Apparatus (1) according to claim 1, wherein the analysis unit is configured to operate in a time domain by analyzing the temporal changes of the images.

3. Apparatus (1) according to claim 1 or 2, wherein the analysis unit is configured to analyze the images by means of artificial intelligence algorithms.

4. Apparatus (1) according to any one of the preceding claims, wherein the actuation device (15) is configured to modify the relative position of the first clamping device (12) and the second clamping device (13) in a direction transversal, in particular perpendicular, to the sealing band (2).

5. Apparatus (1) according to any one of the preceding claims, wherein the actuation device (15) comprises:
- a first carriage (19) carrying the first clamping device (12);
- a second carriage (20) carrying the second clamping device (13); and
- an actuator (21) operatively coupled to the first carriage (19) and the second carriage (20) and configured to control the relative position of the first carriage (19) and the second carriage (20) for controlling the relative position of the first clamping device (12) and the second clamping device (13).

6. Apparatus (1) according to any one of the preceding claims, and further comprising a force detection device (26) configured to determine a time-dependent curve and/or a position-dependent curve of forces acting on the sealing band (2) during its delamination.

7. Apparatus (1) according to any one of the preceding claims, wherein the first clamping device (12) and the second clamping device (13), each comprises a respective first clamping surface and a respective second clamping surface so as to clamp a portion of the sample (14) between the respective first clamping surface and the respective second clamping surface.

8. Apparatus (1) according to any one of the preceding claims, wherein the vision system (16) comprises an illumination device (37) for illuminating at least the sealing band (2) and an imaging device (36) for capturing the images of the sealing band (2) during its delamination.

9. Apparatus (1) according to any of the previous claims, wherein the vision system (16) comprises an imaging device (36) for capturing the images of the sealing band (2) during its delamination and the apparatus further comprises a polarization filter (51) interposed between the imaging device (36) and the working position, wherein preferably the polarization filter (51) is of circular type or elliptical type or linear type.

10. Packaging plant for packaging a pourable product into sealed composite packages formed from a multilayer packaging material comprising:
- a packaging apparatus for forming a plurality of sealed composite packages having one or more sealing bands (2) and being filled with the pourable product;
- a sampling unit for sampling one or more sealed composite packages from the plurality of sealed composite packages; and
- a sealing quality testing apparatus (1) according to any one of the preceding claims for determining the quality of one or more sealing bands (2) of one or more sampled sealed composite packages.

11. Packaging plant according to claim 10, wherein the packaging apparatus comprises:
- a transversal sealing device for generating transversal sealing bands of the sealed composite packages; and
- a control unit operatively connected to the transversal sealing device and configured to control operation of the transversal sealing device in dependence of the determined quality of the one or more sealing bands (2) of the one or more sampled sealed composite packages.

12. Method for determining the quality of a sealing band (2) of a sealed composite package filled with a pourable product, in particular a pourable food product, the sealing band (2) being formed from a first band portion (3), a second band portion (4) and a layer of heat seal material (5) interposed between the first band portion (3) and the second band portion (4);
the method comprises the steps of:
- clamping a sample (14) having the sealing band (2) by means of a first clamping device (12) and a second clamping device (13) and such that the sealing band (2) is interposed between the first clamping device (12) and the second clamping device (13);
- delaminating the sealing band (2) by actuating a relative movement of the first clamping device (12) and the second clamping device (13); and
- capturing one or more images of the sealing band (2) during the step of delaminating,
- **characterized in that** the method comprises a step of analyzing, during which the one or more images are analyzed so as to determine the quality of the sealing band (2),
wherein the vision system (16) captures a series of images representative of the time-evolution of the delamination of sealing band (2),
and during the step of analyzing, the images are analyzed so as to detect the presence of defects.

13. Method according to claim 12, wherein said defects include channels, burn marks, plastic lumps.

14. Method according to claim 12 or 13, further comprising the steps of:
- reading an identification code on the sample (14), and
- associating said one or more images of the sealing band (2) to said identification code.

15. Method for forming sealed composite packages filled with a pourable product from a multilayer packaging material comprising the steps of:
- forming a plurality of sealed composite packages having one or more sealing bands (2) and being filled with the pourable product;
- sampling one or more sealed composite packages from the plurality of sealed composite packages; and
- determining the quality of one or more sealing bands (2) of one or more sampled sealed composite packages according to a method according to any one of claims 11 to 14.

16. Method according to claim 15, wherein during the step of forming a transversal sealing device for forming transversal sealing bands of the sealed composite packages is operated and the operation of the transversal sealing device is controlled in dependence of the determined quality of the one or more sealing bands (2) of the one or more sampled sealed composite packages.
